# EUROPEAN PATENT APPLICATION

(11) **EP 4 815 326 A1**
(43) Date of publication of application: **30.09.2026**
(21) Application number: 25782889.7
(22) Date of filing: 31.03.2025
(51) Int. Cl.: H04B 7/06, H04B 7/0413, H04W 72/231

(54) **METHOD AND DEVICE FOR UE-INITIATED BEAM REPORTING OPERATION**

(30) Priority: 05.04.2024 KR 20240046621
(71) Applicant: Hyundai Motor Company, Seoul 06797 (KR); Kia Corporation, Seoul 06797 (KR)
(72) Inventor: HONG, Ui Hyun, Hwaseong-si, Gyeonggi-do 18280 (KR); LEE, Jeong Su, Hwaseong-si, Gyeonggi-do 18280 (KR); SUH, Young Kil, Hwaseong-si, Gyeonggi-do 18280 (KR); HAHN, Gene Back, Hwaseong-si, Gyeonggi-do 18280 (KR)
(74) Representative: Isarpatent
(86) International application number: PCT/KR2025/004139
(87) International publication number: WO 2025/211666

(57) **Abstract**

This method performed by a UE for a beam reporting operation comprises the steps of: detecting an event; determining at least one beam reporting control parameter among a beam reporting period, the number of beam reports, and a beam reporting time according to the detected event; and transmitting, to a base station, a beam report based on the detected event according to the at least one beam reporting control parameter.

## Description

### [Technical Field]

The present disclosure relates to a beam management method for a mobile communication system, and more particularly, to a user equipment (UE)-initiated/event-driven beam reporting method, and an apparatus therefor.

### [Background Art]

A communication network (e.g. 5G communication network or 6G communication network) is being developed to provide enhanced communication services compared to the existing communication networks (e.g. long term evolution (LTE), LTE-Advanced (LTE-A), etc.). The 5G communication network (e.g. New Radio (NR) communication network) can support frequency bands both below 6GHz and above 6GHz. In other words, the 5G communication network can support both a frequency region 1 (FR1) and/or FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyper-bandwidth, hyper-space, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like.

Meanwhile, in the 3rd generation partnership project (3GPP) Release-19, standardization for user equipment-initiated and event-driven beam management to resolve problems associated with conventional network-driven beam management is in progress. The user equipment-initiated or event-driven beam management is a scheme in which a terminal, which can recognize the state of the current beam and variations in the beam faster than a base station, performs beam management in a proactive manner, unlike conventional network-driven beam management. However, a specific beam reporting operation for terminal-initiated/event-driven beam management has not yet been defined.

### [Disclosure]

### [Technical Problem]

The present disclosure is directed to providing a UE-initiated/event-driven beam reporting method, and an apparatus therefor.

### [Technical Solution]

A method of a terminal, according to exemplary embodiments of the present disclosure for achieving the above-described objective, may comprise: detecting an event; determining at least one beam reporting control parameter among a beam reporting periodicity, a number of beam reporting operations, and a beam reporting execution time according to the detected event; and transmitting, to a base station, a beam report based on the detected event according to the at least one beam reporting control parameter.

The method may further comprise: receiving, from the base station, configuration information including at least one of the beam reporting periodicity, the number of beam reporting operations, and the beam reporting execution time, or including information required to determine at least one of the beam reporting periodicity, the number of beam reporting operations, and the beam reporting execution time, wherein the at least one beam reporting control parameter may be determined based on the configuration information.

The configuration information may be configured for each event type.

The at least one beam reporting control parameter may be determined by the terminal based on a state of the terminal, an operation of the terminal, and/or an environment of the terminal.

Based on the at least one beam reporting control parameter including the beam reporting periodicity, in transmitting the beam report to the base station, beam reporting may be continuously performed according to the beam reporting periodicity until a triggering condition of the event is released.

Based on the at least one beam reporting control parameter including the number of beam reporting operations, beam reporting may be performed for the number of beam reporting operations in transmitting the beam report to the base station.

Beam reporting may be stopped upon release of a triggering condition of the event before a number of performed beam reporting operations reaches the number of beam reporting operations included in the at least one beam reporting control parameter.

Based on the at least one beam reporting control parameter including the beam reporting execution time, in transmitting the beam report to the base station, beam reporting may be performed during the beam reporting execution time until a triggering condition of the event is released.

A method of a terminal, according to exemplary embodiments of the present disclosure for achieving the above-described objective, may comprise: detecting a first event according to satisfaction of a triggering condition of the first event; starting a first timer for holding beam reporting based on the first event; and transmitting, to a base station, a beam report based on the first event upon expiration of the first timer and maintenance of satisfaction of the triggering condition of the first event.

The method may further comprise: based on the triggering condition of the first event becoming unsatisfied before expiration of the first timer, cancelling the first event without transmitting the beam report based on the first event to the base station.

The method may further comprise: based on a second event different from the first event being detected before expiration of the first timer, cancelling the first event and starting a first timer for holding beam reporting based on the second event.

The method may further comprise: based on a second event different from the first event being detected before expiration of the first timer, ignoring the second event.

The method may further comprise: receiving, from the base station, configuration information including whether the first timer is to be applied and/or a timer value for the first timer, wherein the first timer may be started based on the configuration information.

The configuration information may be configured for each event type.

Whether the first timer is to be applied and/or a timer value for the first timer may be determined by the terminal based on a state of the terminal, an operation of the terminal, and/or an environment of the terminal.

A method of a terminal, according to exemplary embodiments of the present disclosure for achieving the above-described objective, may comprise: detecting a first event according to satisfaction of a triggering condition of the first event; starting a first timer for preventing repetition of beam reporting based on the first event; and transmitting, to a base station, a beam report based on the first event upon an event identical to the first event being detected fewer than a specific number of times before expiration of the first timer.

The method may further comprise: based on an event identical to the first event being detected at least a specific number of times before expiration of the first timer, cancelling the first event without transmitting the beam report based on the first event.

The method may further comprise: based on a second event different from the first event being detected before expiration of the first timer, cancelling the first event and starting a first timer for preventing repetition of beam reporting based on the second event.

The method may further comprise: receiving, from the base station, configuration information including whether the first timer is to be applied and/or a timer value for the first timer, wherein the first timer may be started based on the configuration information.

Whether the first timer is to be applied and/or a timer value for the first timer may be determined by the terminal based on a state of the terminal, an operation of the terminal, and/or an environment of the terminal.

### [Advantageous Effects]

According to exemplary embodiments of the present disclosure, in a UE-initiated/event-driven beam reporting operation, a beam reporting periodicity, a number of beam reporting operations, and/or a beam reporting execution time can be dynamically adjusted based on a state, an operation, and/or an environment of a terminal. In addition, when an event is detected, unnecessary beam reporting can be prevented by holding beam reporting for a predetermined period of time instead of immediately transmitting a beam report, or by detecting repeated occurrences of the event within the predetermined period. Accordingly, overall system performance can be improved.

### [Description of Drawings]

FIG. 1 is a conceptual diagram illustrating a first exemplary embodiment of a communication system.
FIG. 2 is a block diagram illustrating a first exemplary embodiment of a communication node constituting a communication system.
FIG. 3 is a block diagram illustrating a first exemplary embodiment of communication nodes performing communication.
FIG. 4A is a block diagram illustrating a first exemplary embodiment of a transmission path.
FIG. 4B is a block diagram illustrating a first exemplary embodiment of a reception path.
FIG. 5 is a conceptual diagram illustrating a first exemplary embodiment of a system frame in a communication system.
FIG. 6 is a conceptual diagram illustrating a first exemplary embodiment of a subframe in a communication system.
FIG. 7 is a conceptual diagram illustrating a first exemplary embodiment of a slot in a communication system.
FIG. 8 is a conceptual diagram illustrating a first exemplary embodiment of a time-frequency resource in a communication system.
FIG. 9 is a sequence diagram illustrating a Mode A operation to which exemplary embodiments of the present disclosure are applied.
FIG. 10 is a sequence diagram illustrating a Mode B operation to which exemplary embodiments of the present disclosure are applied.
FIG. 11 is a sequence diagram illustrating a method of configuring a beam reporting operation according to exemplary embodiments of the present disclosure.
FIG. 12 is a sequence diagram illustrating a timer-based beam reporting operation according to an exemplary embodiment of the present disclosure.
FIG. 13 is a sequence diagram illustrating a timer-based beam reporting operation according to another exemplary embodiment of the present disclosure.

### [Best mode of the Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, '(re)transmission' may refer to 'transmission', 'retransmission', or 'transmission and retransmission', '(re)configuration' may refer to 'configuration', 'reconfiguration', or 'configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments described explicitly in the present disclosure, as well as combinations of the exemplary embodiments, extensions of the exemplary embodiments, and/or variations of the exemplary embodiments, may be performed. Some operations may be omitted, and a sequence of operations may be altered.

Even when a method (e.g. transmission or reception of a signal) to be performed at a first communication node among communication nodes is described in exemplary embodiments, a corresponding second communication node may perform a method (e.g. reception or transmission of the signal) corresponding to the method performed at the first communication node. In other words, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation node B (gNodeB), gNB, device, apparatus, node, communication node, base transceiver station (BTS), radio remote head (RRH), transmission and reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g. master information block (MIB), system information block (SIB)) and/or an RRC message. The MAC signaling may refer to an operation of transmitting and receiving a MAC control element (CE). The PHY signaling may refer to an operation of transmitting and receiving control information (e.g. downlink control information (DCI), uplink control information (UCI), or sidelink control information (SCI)).

In the present disclosure, 'configuration of an operation (e.g. transmission operation)' may refer to signaling of configuration information (e.g. information elements, parameters) required for the operation and/or information indicating to perform the operation. 'configuration of information elements (e.g. parameters)' may refer to signaling of the information elements. In the present disclosure, 'signal and/or channel' may refer to signal, channel, or both signal and channel, and 'signal' may be used to mean 'signal and/or channel'.

A communication network to which exemplary embodiments are applied is not limited to that described below, and the exemplary embodiments may be applied to various communication networks (e.g. 4G communication networks, 5G communication networks, and/or 6G communication networks). Here, 'communication network' may be used interchangeably with a term 'communication system'.

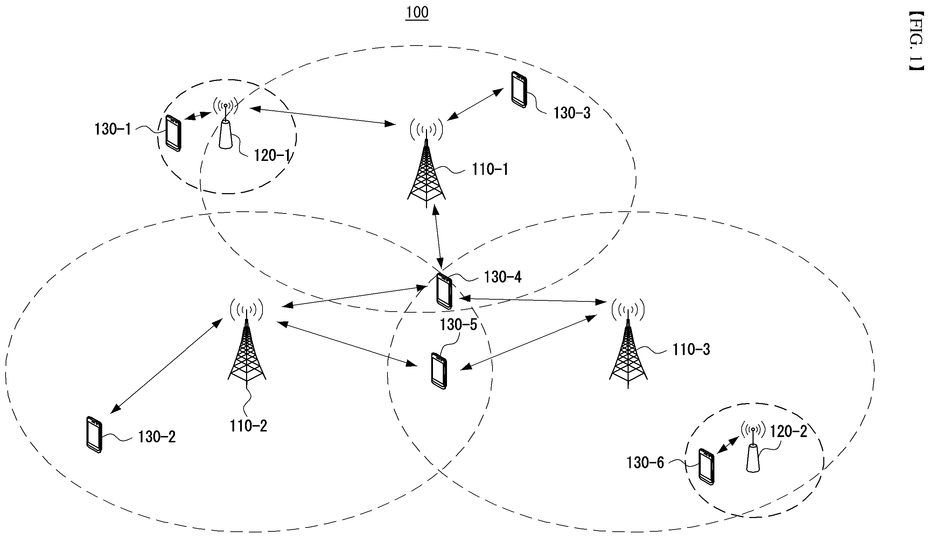

FIG. 1 is a conceptual diagram illustrating a first exemplary embodiment of a communication system.

As shown in FIG. 1, a communication system 100 may comprise a plurality of communication nodes 110-1, 110-2, 110-3, 120-1, 120-2, 130-1, 130-2, 130-3, 130-4, 130-5, and 130-6. In addition, the communication system 100 may further include a core network (e.g. a serving gateway (S-GW), a packet data network (PDN) gateway (P-GW), a mobility management entity (MME). When the communication system 100 is a 5G communication (e.g. NR system), the core network may include an access and mobility management function (AMF), a user plane function (UPF), a session management function (SMF), and the like.

The plurality of communication nodes 110 to 130 may support communication protocols (e.g. LTE communication protocol, LTE-A communication protocol, NR communication protocol, etc.) specified in 3^{rd} generation partnership project (3GPP) standards. The plurality of communication nodes 110 to 130 may support a code division multiple access (CDMA) technique, a wideband CDMA (WCDMA) technique, a time division multiple access (TDMA) technique, a frequency division multiple access (FDMA) technique, an orthogonal frequency division multiplexing (OFDM) technique, a filtered OFDM technique, a cyclic prefix OFDM (CP-OFDM) technique, a discrete Fourier transform spread OFDM (DFT-s-OFDM) technique, an orthogonal frequency division multiple access (OFDMA) technique, a single carrier FDMA (SC-FDMA) technique, a non-orthogonal multiple access (NOMA) technique, a generalized frequency division multiplexing (GFDM) technique, a filter bank multi-carrier (FBMC) technique, a universal filtered multi-carrier (UFMC) technique, a space division multiple access (SDMA) technique, or the like. Each of the plurality of communication node may have the following structure.

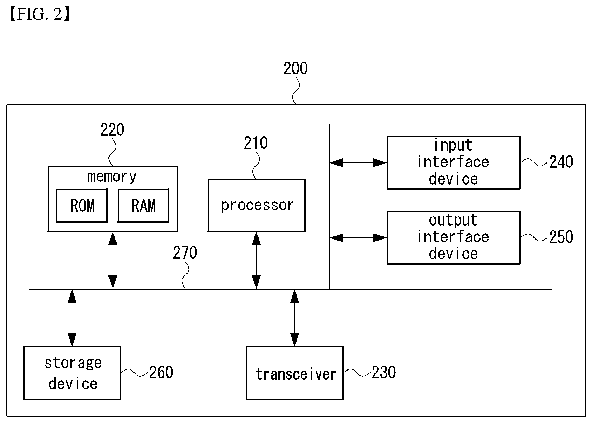

FIG. 2 is a block diagram illustrating a first exemplary embodiment of a communication node constituting a communication system.

As shown in FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. The communication system 100 including the base stations 110-1, 110-2, 110-3, 120-1, and 120-2 and the terminals 130-1, 130-2, 130-3, 130-4, 130-5, and 130-6 may be referred to as an 'access network'. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B, evolved Node-B (eNB), gNB, advanced base station (ABS), high reliability-base station (HR-BS), base transceiver station (BTS), radio base station, radio transceiver, access point, access node, radio access station (RAS), mobile multihop relay-base station (MMR-BS), relay station (RS), advanced relay station (ARS), high reliability-relay station (HR-RS), home NodeB (HNB), home eNodeB (HeNB), road side unit (RSU), radio remote head (RRH), transmission point (TP), transmission and reception point (TRP), or the like.

Each of the plurality of terminals 130-1, 130-2, 130-3, 130-4, 130-5, and 130-6 may refer to a user equipment (UE), terminal equipment (TE), advanced mobile station (AMS), high reliability-mobile station (HR-MS), terminal, access terminal, mobile terminal, station, subscriber station, mobile station, portable subscriber station, node, device, on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support multi-input multi-output (MIMO) transmission (e.g. a single-user MIMO (SU-MIMO), multi-user MIMO (MU-MIMO), massive MIMO, or the like), coordinated multipoint (CoMP) transmission, carrier aggregation (CA) transmission, transmission in an unlicensed band, sidelink communication (e.g. device-to-device (D2D) communication, proximity services (ProSe)), Internet of Things (IoT) communication, dual connectivity (DC), and/or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2, and operations supported by the plurality of base stations 110-1, 110-2, 110-3, 120-1, and 120-2. For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control sidelink communications between the fourth terminal 130-4 and the fifth terminal 130-5, and thus the fourth terminal 130-4 and the fifth terminal 130-5 may perform the sidelink communications under control of the second base station 110-2 and the third base station 110-3, respectively.

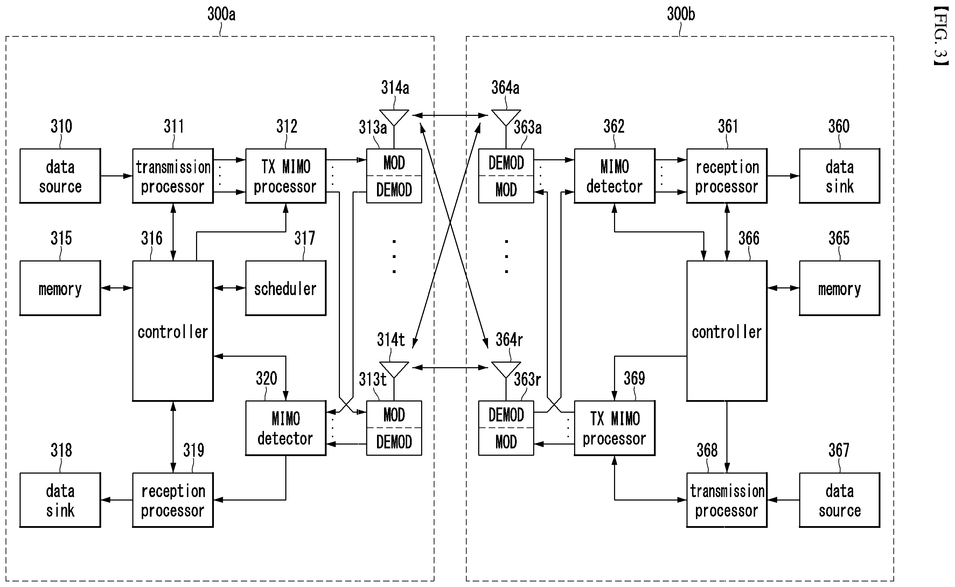

Meanwhile, communication nodes that perform communications in the communication network may be configured as follows. A communication node shown in FIG. 3 may be a specific exemplary embodiment of the communication node shown in FIG. 2.

FIG. 3 is a block diagram illustrating a first exemplary embodiment of communication nodes performing communication.

As shown in FIG. 3, each of a first communication node 300a and a second communication node 300b may be a base station or UE. The first communication node 300a may transmit a signal to the second communication node 300b. A transmission processor 311 included in the first communication node 300a may receive data (e.g. data unit) from a data source 310. The transmission processor 311 may receive control information from a controller 316. The control information may include at least one of system information, RRC configuration information (e.g. information configured by RRC signaling), MAC control information (e.g. MAC CE), or PHY control information (e.g. DCI, SCI).

The transmission processor 311 may generate data symbol(s) by performing processing operations (e.g. encoding operation, symbol mapping operation, etc.) on the data. The transmission processor 311 may generate control symbol(s) by performing processing operations (e.g. encoding operation, symbol mapping operation, etc.) on the control information. In addition, the transmission processor 311 may generate synchronization/reference symbol(s) for synchronization signals and/or reference signals.

A Tx MIMO processor 312 may perform spatial processing operations (e.g. precoding operations) on the data symbol(s), control symbol(s), and/or synchronization/reference symbol(s). An output (e.g. symbol stream) of the Tx MIMO processor 312 may be provided to modulators (MODs) included in transceivers 313a to 313t. The modulator may generate modulation symbols by performing processing operations on the symbol stream, and may generate signals by performing additional processing operations (e.g. analog conversion operations, amplification operation, filtering operation, up-conversion operation, etc.) on the modulation symbols. The signals generated by the modulators of the transceivers 313a to 313t may be transmitted through antennas 314a to 314t.

The signals transmitted by the first communication node 300a may be received at antennas 364a to 364r of the second communication node 300b. The signals received at the antennas 364a to 364r may be provided to demodulators (DEMODs) included in transceivers 363a to 363r. The demodulator (DEMOD) may obtain samples by performing processing operations (e.g. filtering operation, amplification operation, down-conversion operation, digital conversion operation, etc.) on the signals. The demodulator may perform additional processing operations on the samples to obtain symbols. A MIMO detector 362 may perform MIMO detection operations on the symbols. A reception processor 361 may perform processing operations (e.g. de-interleaving operation, decoding operation, etc.) on the symbols. An output of the reception processor 361 may be provided to a data sink 360 and a controller 366. For example, the data may be provided to the data sink 360 and the control information may be provided to the controller 366.

On the other hand, the second communication node 300b may transmit signals to the first communication node 300a. A transmission processor 368 included in the second communication node 300b may receive data (e.g. data unit) from a data source 367 and perform processing operations on the data to generate data symbol(s). The transmission processor 368 may receive control information from the controller 366 and perform processing operations on the control information to generate control symbol(s). In addition, the transmission processor 368 may generate reference symbol(s) by performing processing operations on reference signals.

A Tx MIMO processor 369 may perform spatial processing operations (e.g. precoding operations) on the data symbol(s), control symbol(s), and/or reference symbol(s). An output (e.g. symbol stream) of the Tx MIMO processor 369 may be provided to modulators (MODs) included in the transceivers 363a to 363t. The modulator may generate modulation symbols by performing processing operations on the symbol stream, and may generate signals by performing additional processing operations (e.g. analog conversion operation, amplification operation, filtering operation, up-conversion operations) on the modulation symbols. The signals generated by the modulators of the transceivers 363a to 363t may be transmitted through the antennas 364a to 364t.

The signals transmitted by the second communication node 300b may be received at the antennas 314a to 314r of the first communication node 300a. The signals received at the antennas 314a to 314r may be provided to demodulators (DEMODs) included in the transceivers 313a to 313r. The demodulator may obtain samples by performing processing operations (e.g. filtering operation, amplification operation, down-conversion operation, digital conversion operation) on the signals. The demodulator may perform additional processing operations on the samples to obtain symbols. A MIMO detector 320 may perform a MIMO detection operation on the symbols. The reception processor 319 may perform processing operations (e.g. de-interleaving operation, decoding operation, etc.) on the symbols. An output of the reception processor 319 may be provided to a data sink 318 and the controller 316. For example, the data may be provided to the data sink 318 and the control information may be provided to the controller 316.

Memories 315 and 365 may store the data, control information, and/or program codes. A scheduler 317 may perform scheduling operations for communication. The processors 311, 312, 319, 361, 368, and 369 and the controllers 316 and 366 shown in FIG. 3 may be the processor 210 shown in FIG. 2, and may be used to perform methods described in the present disclosure.

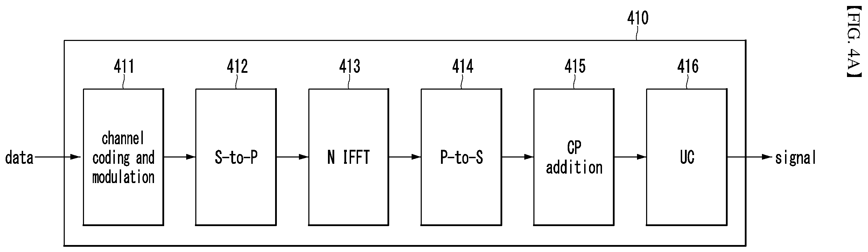

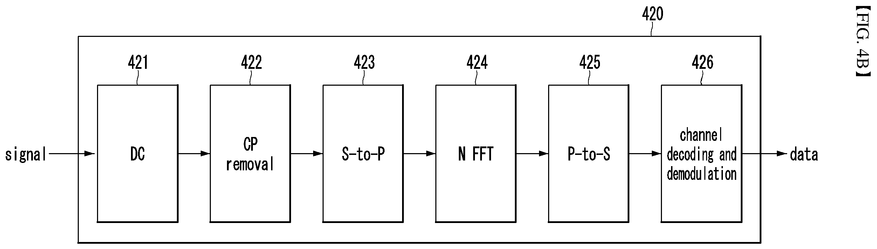

FIG. 4A is a block diagram illustrating a first exemplary embodiment of a transmission path, and FIG. 4B is a block diagram illustrating a first exemplary embodiment of a reception path.

As shown in FIGS. 4A and 4B, a transmission path 410 may be implemented in a communication node that transmits signals, and a reception path 420 may be implemented in a communication node that receives signals. The transmission path 410 may include a channel coding and modulation block 411, a serial-to-parallel (S-to-P) block 412, an N-point inverse fast Fourier transform (N-point IFFT) block 413, a parallel-to-serial (P-to-S) block 414, a cyclic prefix (CP) addition block 415, and up-converter (UC) 416. The reception path 420 may include a down-converter (DC) 421, a CP removal block 422, an S-to-P block 423, an N-point FFT block 424, a P-to-S block 425, and a channel decoding and demodulation block 426. Here, N may be a natural number.

In the transmission path 410, information bits may be input to the channel coding and modulation block 411. The channel coding and modulation block 511 may perform a coding operation (e.g. low-density parity check (LDPC) coding operation, polar coding operation, etc.) and a modulation operation (e.g. Quadrature Phase Shift Keying (OPSK), Quadrature Amplitude Modulation (QAM), etc.) on the information bits. An output of the channel coding and modulation block 411 may be a sequence of modulation symbols.

The S-to-P block 412 may convert frequency domain modulation symbols into parallel symbol streams to generate N parallel symbol streams. N may be the IFFT size or the FFT size. The N-point IFFT block 413 may generate time domain signals by performing an IFFT operation on the N parallel symbol streams. The P-to-S block 414 may convert the output (e.g. parallel signals) of the N-point IFFT block 413 to serial signals to generate the serial signals.

The CP addition block 415 may insert a CP into the signals. The UC 416 may up-convert a frequency of the output of the CP addition block 415 to a radio frequency (RF) frequency. Further, the output of the CP addition block 415 may be filtered in baseband before the up-conversion.

The signal transmitted from the transmission path 410 may be input to the reception path 420. Operations in the reception path 420 may be reverse operations for the operations in the transmission path 410. The DC 421 may down-convert a frequency of the received signals to a baseband frequency. The CP removal block 422 may remove a CP from the signals. The output of the CP removal block 422 may be serial signals. The S-to-P block 423 may convert the serial signals into parallel signals. The N-point FFT block 424 may generate N parallel signals by performing an FFT algorithm. The P-to-S block 425 may convert the parallel signals into a sequence of modulation symbols. The channel decoding and demodulation block 426 may perform a demodulation operation on the modulation symbols and may restore data by performing a decoding operation on a result of the demodulation operation.

In FIGS. 4A and 4B, discrete Fourier transform (DFT) and inverse DFT (IDFT) may be used instead of FFT and IFFT. Each of the blocks (e.g. components) in FIGS. 4A and 4B may be implemented by at least one of hardware, software, or firmware. For example, some blocks in FIGS. 4A and 4B may be implemented by software, and other blocks may be implemented by hardware or a combination of hardware and software. In FIGS. 4A and 4B, one block may be subdivided into a plurality of blocks, a plurality of blocks may be integrated into one block, some blocks may be omitted, and blocks supporting other functions may be added.

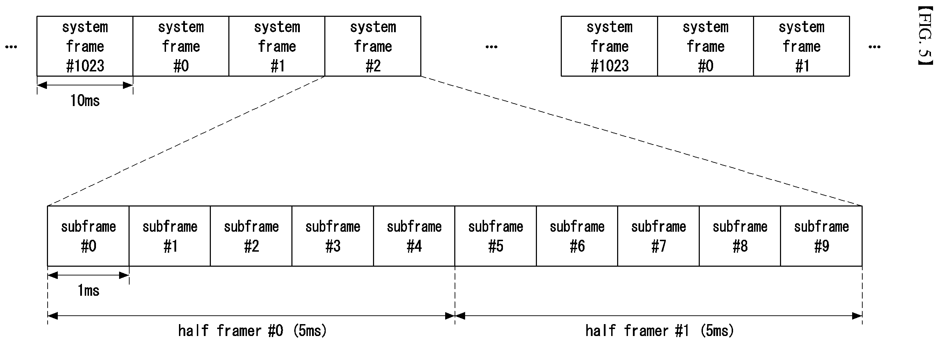

FIG. 5 is a conceptual diagram illustrating a first exemplary embodiment of a system frame in a communication system.

As shown in FIG. 5, time resources in the communication system may be divided on a frame basis. For example, system frames of the communication system may be configured continuously in the time domain. The length of the system frame may be 10 millisecond (ms). A system frame number (SFN) may be set to one of #0 to #1023. In this case, 1024 system frames may be repeated on the time domain of the communication system. For example, an SFN of a system frame after the system frame #1023 may be #0.

One system frame may include two half frames. The length of one half frame may be 5 ms. A half frame located at a starting region of the system frame may be referred to as 'half frame #0', and a half frame located at an ending region of the system frame may be referred to as 'half frame #1'. One system frame may include 10 subframes. The length of one subframe may be 1 ms. 10 subframes within one system frame may be referred to as subframes #0-#9.

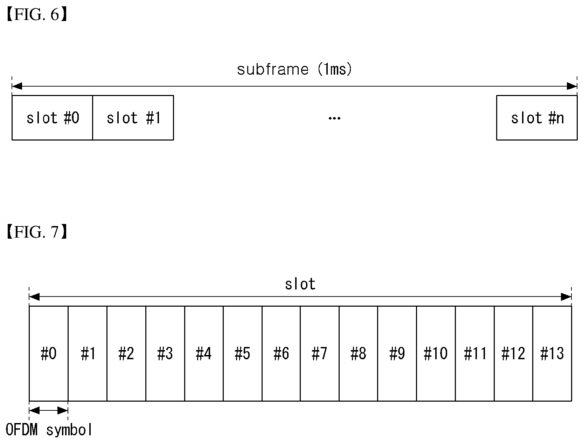

FIG. 6 is a conceptual diagram illustrating a first exemplary embodiment of a subframe in a communication system.

As shown in FIG. 6, one subframe may include n slots, and n may be a natural number. Accordingly, one subframe may consist of one or more slots.

FIG. 7 is a conceptual diagram illustrating a first exemplary embodiment of a slot in a communication system.

As shown in FIG. 7, one slot may include one or more symbols. For example, one slot shown in FIG. 7 may include 14 symbols. The length of slot may vary according to the number of symbols included in a slot and the length of symbol. Alternatively, the length of slot may vary according to a numerology.

The numerology applied to physical signals and channels in a communication system may be variable. The numerology may be adjusted to meet various technical requirements of the communication system. In a communication system where a cyclic prefix (CP)-based OFDM waveform technology is applied, the numerology may include a subcarrier spacing and a CP length (or CP type). Table 1 may illustrate a first exemplary embodiment of a method for configuring numerologies for a CP-OFDM-based communication system. Depending on a frequency band in which the communication system operates, at least some of the numerologies in Table 1 may be supported. Additionally, the communication system may support numerologies not listed in Table 1.

**[Table 1]**

| Subcarrier spacing | 15 kHz | 30 kHz | 60 kHz | 120 kHz | 240 kHz | 480 kHz |
|---|---|---|---|---|---|---|
| OFDM symbol length [µs] | 66.7 | 33.3 | 16.7 | 8.3 | 4.2 | 2.1 |
| CP length [us] | 4.76 | 2.38 | 1.19 | 0.60 | 0.30 | 0.15 |
| Number of OFDM symbols within 1ms | 14 | 28 | 56 | 112 | 224 | 448 |

When a subcarrier spacing is 15 kHz (e.g. µ = 0), the length of slot may be 1 ms. In this case, one system frame may include 10 slots. When a subcarrier spacing is 30 kHz (e.g. µ = 1), the length of slot may be 0.5 ms. In this case, one system frame may include 20 slots.

When a subcarrier spacing is 60 kHz (e.g. µ = 2), the length of slot may be 0.25 ms. In this case, one system frame may include 40 slots. When a subcarrier spacing is 120 kHz (e.g. µ = 3), the length of slot may be 0.125 ms. In this case, one system frame may include 80 slots. When a subcarrier spacing is 240 kHz (e.g. µ = 4), the length of slot may be 0.0625 ms. In this case, one system frame may include 160 slots.

The symbol may be configured as a downlink (DL) symbol, flexible (FL) symbol, or uplink (UL) symbol. A slot composed of only DL symbols may be referred to as a 'DL slot', a slot composed of only FL symbols may be referred to as a 'FL slot', and a slot composed of only UL symbols may be referred to as a 'UL slot'.

A slot format may be semi-statically configured through higher-layer signaling (e.g. RRC signaling). Information indicating a semi-static slot format may be included in system information, and the semi-static slot format may be configured cell-specifically. Additionally, a semi-static slot format may be further configured for each terminal through terminal-specific higher-layer signaling (e.g. RRC signaling). Flexible symbols in the cell-specific slot format may be overridden to be downlink symbols or uplink symbols through terminal-specific higher-layer signaling. Furthermore, a slot format may be dynamically indicated through physical layer signaling (e.g. slot format indicator (SFI) included in DCI). The semi-statically configured slot format may be overridden by the dynamically indicated slot format. For example, flexible symbols configured semi-statically may be overridden to be downlink symbols or uplink symbols by the SFI.

Reference signals may include Channel State Information-Reference Signal (CSI-RS), Sounding Reference Signal (SRS), Demodulation-Reference Signal (DM-RS), and Phase Tracking-Reference Signal (PT-RS). Channels may include Physical Broadcast Channel (PBCH), Physical Downlink Control Channel (PDCCH), Physical Downlink Shared Channel (PDSCH), Physical Uplink Control Channel (PUCCH), PUSCH (Physical Uplink Shared Channel), PSCCH (Physical Sidelink Control Channel), and PSSCH (Physical Sidelink Shared Channel). In the present disclosure, a control channel may refer to PDCCH, PUCCH, or PSCCH, and a data channel may refer to PDSCH, PUSCH, or PSSCH.

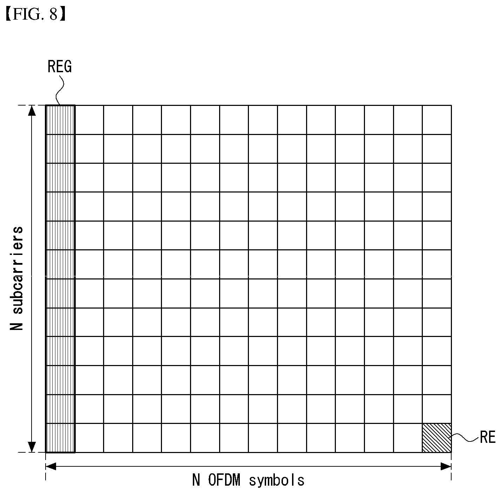

FIG. 8 is a conceptual diagram illustrating a first exemplary embodiment of a time-frequency resource in a communication system.

As shown FIG. 8, a resource composed of one OFDM symbol on the time axis and one subcarrier on the frequency axis may be defined as a 'resource element (RE)'. A resource composed of one OFDM symbol on the time axis and K subcarriers on the frequency axis may be defined as a 'resource element group (REG)'. The REG may include K REs. The REG may be used as a basic unit of resource allocation in the frequency domain. K may be a natural number. For example, K may be 12. N may be a natural number. In the slot shown in FIG.7, N may be 14. N OFDM symbols may be used as a basic unit of resource allocation in the time domain.

In the present disclosure, an RB may refer to a common RB (CRB). Alternatively, an RB may refer to a physical RB (PRB) or a virtual RB (VRB). In a communication system, a CRB may refer to an RB that constitutes a set of contiguous RBs (e.g. a common RB grid) based on a reference frequency (e.g. point A). A carrier and/or bandwidth part may be mapped onto the common RB grid. That is, a carrier and/or bandwidth part may be configured with CRB(s). The RBs or CRBs that constitute a bandwidth part may be referred to as PRBs, and a CRB index may be appropriately converted to a PRB index within the bandwidth part.

Downlink data may be transmitted through a PDSCH. A base station may transmit configuration information (e.g. scheduling information) of the PDSCH to a terminal through a PDCCH. The terminal may obtain the configuration information of the PDSCH by receiving the PDCCH (e.g. Downlink Control Information (DCI)). For example, the configuration information of the PDSCH may include a Modulation Coding Scheme (MCS) used for transmission/reception of the PDSCH, time resource information of the PDSCH, frequency resource information of the PDSCH, and feedback resource information for the PDSCH. The PDSCH may refer to a radio resource where the downlink data is transmitted and received. Alternatively, the PDSCH may refer to the downlink data itself. The PDCCH may refer to a radio resource where the downlink control information (e.g. DCI) is transmitted and received. Alternatively, the PDCCH may refer to the downlink control information itself.

The terminal may perform a monitoring operation for the PDCCH to receive the PDSCH transmitted from the base station. The base station may notify the terminal of configuration information for the PDCCH monitoring operation using a higher-layer message (e.g. Radio Resource Control (RRC) message). The configuration information for the PDCCH monitoring operation may include Control Resource Set (CORESET) information and search space information.

The CORESET information may include PDCCH DMRS information, PDCCH precoding information, and PDCCH occasion information, and the like. A PDCCH DMRS may be a DMRS used for demodulating a PDCCH. A PDCCH occasion refers to a region where a PDCCH may potentially exist, meaning it is a region where DCI can be transmitted. A PDCCH occasion may also be referred to as a PDCCH candidate. The PDCCH occasion information may include time resource information and frequency resource information for the PDCCH occasion. In the time domain, the length of the PDCCH occasion may be indicated in symbol units. In the frequency domain, the size of the PDCCH occasion can be indicated in RB units (e.g. in PRB units or CRB units).

The search space information may include a CORESET identifier (ID) associated with a search space, a periodicity of PDCCH monitoring, and/or an offset of PDCCH monitoring. The periodicity and offset of PDCCH monitoring may each be indicated in slot units. Additionally, the search space information may further include an index of a symbol where the PDCCH monitoring operation starts.

The base station may configure Bandwidth Part(s) (BWP(s)) for downlink communication. The BWP(s) may be configured differently for each terminal. The base station may notify the terminal of BWP configuration information using higher-layer signaling. The higher-layer signaling may refer to a transmission operation of system information and/or a transmission operation of RRC message(s). The number of BWPs configured for a single terminal may be one or more. The terminal may receive the BWP configuration information from the base station and identify the configured BWP(s) based on the received configuration information. When multiple BWPs are configured for downlink communication, the base station may activate one or more BWPs from among the multiple BWPs. The base station may transmit configuration information of the activated BWP(s) to the terminal using at least one of higher-layer signaling, Medium Access Control (MAC) Control Element (CE), or DCI. The base station may perform downlink communication using the activated BWP(s). The terminal may identify the activated BWP(s) by receiving the configuration information from the base station and perform downlink reception operations on the activated BWP(s).

Discussions on Rel-19 NR MIMO enhancements for intra-cell beam management and inter-cell beam management are being conducted based on a work item description (WID). Such improvements mainly target FR2 and single transmission/reception point (sTRP) scenarios, and aim to reduce overhead or latency while utilizing existing legacy CSI measurement and reporting configuration procedures.

To this end, UE-initiated (UEI)/event-driven (ED) beam management procedures are being discussed. Beam management methods defined up to Rel-18 are configured as network-initiated operations. That is, in a network-initiated beam management method, a network node (e.g. a base station) may instruct a terminal to switch to a specific beam for DL reception or UL transmission. In this case, because the base station provides an instruction based on a measurement report received from the terminal, the base station may not be able to identify an optimal beam until the measurement report is received from the terminal.

If a beam management operation is initiated by a terminal that can recognize a beam change first, latency (e.g. a time required for the base station to request a measurement report and receive the measurement report from the terminal) and signaling overhead (e.g. overhead of signaling for instructing the terminal to transmit the measurement report) may be reduced compared to the network-initiated beam management operation.

Meanwhile, in 3GPP RAN1 meetings (RAN #116 and RAN #116-bis), UEI/ED beam reporting procedures and general beam report transmission procedures were approved.

First, a beam report transmission procedure is largely classified into Mode A and Mode B, and an outline of a procedure according to each mode is as follows.

First, Mode A corresponds to a scheme in which uplink control information (UCI) for a beam report is dynamically scheduled by a base station, and may be performed through the following three-step operation.

Step 1: A terminal may transmit a first UL channel requesting resources for a second UL channel used to transmit a beam report. The first UL channel may be configured as a PUCCH (i.e. a first PUCCH) including 1-bit information or multi-bit information, and the PUCCH may follow an existing scheduling request (SR) type or a new UCI type.

Step 2: The terminal may detect a DCI format indicating resources of a second UL channel. In this case, a new DCI format is not introduced.

Step 3: The terminal may transmit a beam report on the second UL channel. In this case, the second UL channel may be a PUCCH, a PUSCH, or both.

Mode A is a baseline capability of a terminal, and all terminals supporting UEI/ED beam reporting are required to support this capability.

On the other hand, Mode B corresponds to a scheme in which UCI is transmitted in preconfigured resources for a second UL channel and may be performed through the following two-step operation.

Step 1: A terminal may transmit a first UL channel notifying that a beam report is to be transmitted on a second UL channel. The first UL channel may be configured as a PUCCH (i.e. a first PUCCH) including 1-bit information or multi-bit information, and the PUCCH may follow an existing SR type or a new UCI type.

Step 2: The terminal may transmit a beam report on the second UL channel. As in Mode A, the second UL channel may be a PUCCH, a PUSCH, or both.

In Mode B, the notification in Step 1 and the beam report in Step 2 are transmitted in separate report instances. In addition, whether a terminal receives acknowledgment information for each step in Mode A and Mode B has not been determined.

In addition, cross-component carrier (cross-CC) beam reporting may be supported in the above procedures for both Mode A and Mode B.

As described above, for a UEI/ED beam reporting operation, a procedure for delivering information from a terminal to a base station (Step 1) is first required in all modes. In Mode A in which resources for a beam report are not allocated in advance, the terminal may request resources for the beam report from the base station. In Mode B in which resources for a beam report are allocated in advance, the terminal may inform the base station that the terminal is to use the pre-allocated resources for the beam report.

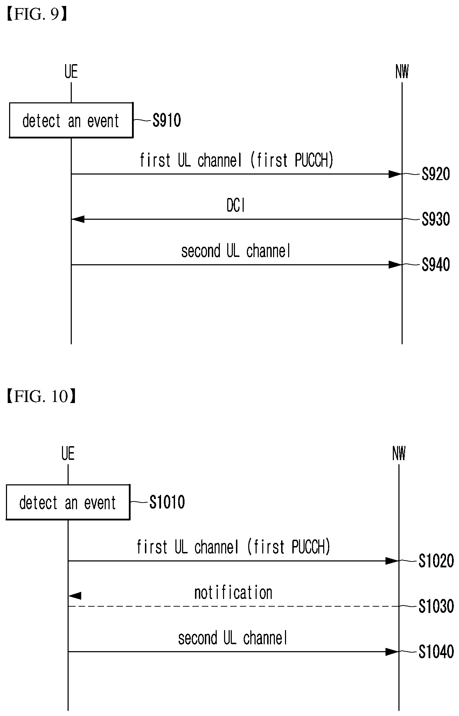

FIG. 9 is a sequence diagram illustrating a Mode A operation to which exemplary embodiments of the present disclosure are applied.

As shown in FIG. 9, a terminal may detect at least one event (S910). In this case, the terminal may detect at least one of the events described above (e.g. Event-1 to Event-9). When at least one event is detected, the terminal may request resources for a beam report through a first UL channel (i.e. a first PUCCH) (S920), and a base station that has received the first UL channel may indicate resources for a second UL channel to be used by the terminal for transmitting the beam report through DCI (S930). Thereafter, the terminal may transmit a second UL channel including the beam report using the resources (S940).

FIG. 10 is a sequence diagram illustrating a Mode B operation to which exemplary embodiments of the present disclosure are applied.

As shown in FIG. 10, a terminal may detect at least one event (S1010). In this case, the terminal may detect at least one of the events described above (e.g. Event-1 to Event-9). When at least one event is detected, the terminal may inform a base station, through a first UL channel (i.e. a first PUCCH), that the terminal is to transmit second UL channel(s) using preconfigured resources (S1020). Thereafter, the terminal may transmit second UL channel(s) including a beam report to the base station using the preconfigured resources (S1040).

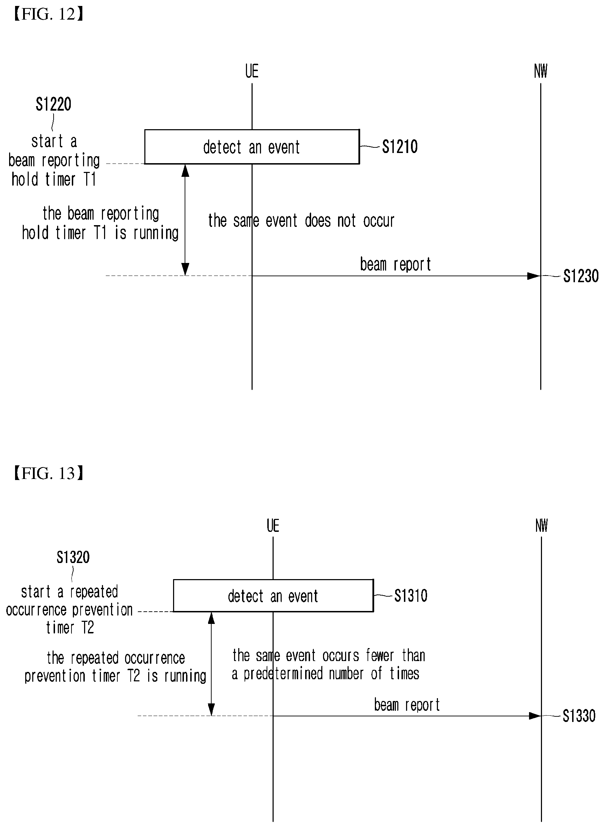

In this case, the terminal may transmit the second UL channel(s) after receiving, from the base station, an acknowledgement (ACK) message indicating that the first PUCCH has been received (e.g. an ACK message composed of a 1-bit indicator or a notification message) (i.e. S1330 of FIG. 13). Alternatively, the terminal may transmit the second UL channel(s) in a slot or symbol after a predetermined offset from a time associated with transmission of the first PUCCH (e.g. a symbol or slot in which the first PUCCH is transmitted, such as the last symbol constituting the first PUCCH) without receiving an ACK message for the first PUCCH from the base station. For example, when it is not confirmed that reception of the first PUCCH by the base station has failed until the predetermined offset elapses from the time associated with transmission of the first PUCCH, the terminal may transmit the second UL channel(s) in a slot or symbol after the predetermined offset from the time associated with transmission of the first PUCCH. In this case, the offset may be configured by the base station for the terminal in units of symbols, sub-slots, slots, or subframes, or in the form or an absolute time, or may be predefined in technical specifications. Meanwhile, because a situation may occur in which the terminal fails to receive an ACK message transmitted by the base station, the base station may transmit the ACK message one or more times.

Meanwhile, the following events are being discussed as events that trigger the UEI/ED beam reporting described above.

Event-1: Quality (e.g. L1-RSRP) of the current beam is worse than a certain threshold.

Event-2: Quality of at least one new beam becomes a threshold value better than the current beam.

Event-3: Quality of a new beam is better than a certain threshold.

Event-4: Quality of the current beam is worse than a threshold 1, and quality of at least one new beam is better than a threshold 2.

Event-5: Absolute value of a difference between the quality of the current beam and the quality of at least one new beam is lower than a threshold.

Event-6: The current beam is not in the best K (>1) beams among beams configured for measurement and reporting.

Event-7a: Quality (e.g. L1-RSRP) of at least one new beam becomes a threshold value better than an RS derived from the activated TCI state with the worst quality.

Event-7b: Quality (e.g. L1-RSRP) of at least one new beam becomes a threshold value better than an RS derived from the activated TCI state with the best quality.

Event-8: Quality (e.g. L1-RSRP) of M (>1) new beams becomes a threshold value better than the current beam.

Event-9: Quality of at least one new beam (e.g., L1-RSRP) becomes a threshold value better than the configured reference RS (which may be SSB or CSI-RS).

As described above, only various events for triggering beam reporting and triggering conditions thereof have been defined, and a specific procedure for an operation after event triggering has not yet been defined. With respect to an operation after event triggering, a procedure for stopping a beam reporting operation may be considered. Here, the procedure for stopping the beam reporting operation may refer to a procedure for stopping the beam reporting operation when a condition for stopping the beam reporting operation (e.g. an event release condition) is satisfied after a terminal performs beam reporting to a base station due to occurrence of the event.

In addition, a procedure for adjusting a beam reporting periodicity, a number of beam reporting operations, and/or a beam reporting execution time until the condition for stopping the beam reporting operation is reached may be considered. A total number of beam reporting operations performed by the terminal for the base station may be determined according to the above-described beam reporting periodicity, number of beam reporting operations, and/or beam reporting execution time.

However, if the number of beam reporting operations becomes greater than necessary, beam reporting may be performed too frequently, thereby increasing overhead. In addition, unnecessarily frequent beam switching procedures may be triggered in the terminal or the base station. Accordingly, methods for adjusting a beam reporting periodicity, a number of beam reporting operations, or a beam reporting execution time until the condition for stopping the beam reporting operation is reached, in addition to triggering conditions of an event that triggers beam reporting, are required.

Hereinafter, methods for adjusting a beam reporting periodicity, a number of beam reporting operations, or a beam reporting execution time (i.e. beam reporting control parameter(s)) for performing beam reporting in a beam reporting operation are described.

### Adjustment of beam reporting periodicity

In an exemplary embodiment, a beam reporting periodicity until a condition for stopping a beam reporting operation (e.g. an event release condition) is reached may be configured according to a specific condition. Here, the specific condition may include factors related to a state of a terminal, an operation of the terminal, or a surrounding environment in which the terminal is located.

Specifically, a state condition related to the terminal may include signal quality indicators indicating a quality of a current beam (e.g. L1-RSRP, L1-RSRQ, L1-SINR) or a quality of a new beam (e.g. L1-RSRP, L1-RSRQ, L1-SINR). In addition, a beam reporting periodicity may be set based on comparison between the quality and a specific threshold value. For example, when the quality of the current beam is high, that is, when signal strength is high and a channel environment is stable, the beam reporting periodicity may be set to be long. On the other hand, when the quality of the current beam is low or has high variability, more frequent beam reporting may be required, and thus the beam reporting periodicity may be set to be short.

An operation condition related to the terminal may also affect the beam reporting periodicity. For example, when the terminal is moving, particularly when a moving speed of the terminal is higher, a channel environment may change significantly. In this case, the beam reporting periodicity may be set to be short so that the timing of beam switching or handover can be determined more precisely by performing beam reporting frequently. On the other hand, when a moving speed of the terminal is low or when the terminal is stationary, a channel environment is likely to be relatively stable, and thus the beam reporting periodicity may be set to be long.

In addition, a case in which signal quality changes rapidly due to rotation of the terminal or blockage caused by an obstacle may also be considered. When the terminal rotates rapidly, signal strength of a current beam may rapidly decrease and switching to a new beam may be required. Accordingly, the beam reporting periodicity may be set to be short to support prompt selection of an optimal beam. Conversely, when the terminal maintains a constant direction, the beam reporting periodicity may be set to be long.

The surrounding environment in which the terminal is located may also affect the beam reporting periodicity. For example, when the terminal is located in a multipath environment such as a dense building area, a tunnel, or an indoor environment, a channel environment is likely to be unstable, and thus it may be advantageous to set the beam reporting periodicity to be short. On the other hand, when the terminal is located in an open area or a high-altitude location, a change in signal quality may be relatively small, and thus the beam reporting periodicity may be set to be long.

By comprehensively considering the above conditions, the beam reporting periodicity may be dynamically set. For example, when the quality of the current beam is high and/or when the speed of the terminal is low, the beam reporting periodicity may be set to be relatively long. On the other hand, when the quality of the current beam is low or unstable and/or when the speed of the terminal is high, the beam reporting periodicity may be set to be short.

The above-described beam reporting periodicity may be determined by the terminal itself based on a state of the terminal, an operation related to the terminal, or factors related to a surrounding environment in which the terminal is located. Alternatively, the base station may determine the beam reporting periodicity based on information regarding the state or operation related to the terminal, or the surrounding environment in which the terminal is located, and may provide configuration information for the determined beam reporting periodicity to the terminal. In this case, the information regarding the state or operation related to the terminal, or the surrounding environment in which the terminal is located, may be reported explicitly or implicitly by the terminal to the base station. Additionally or alternatively, the information regarding the state or operation related to the terminal, or the surrounding environment in which the terminal is located, may be derived or predicted by the base station based on information collected by the base station.

Configuration information for the beam reporting periodicity may be delivered to the terminal in various manners. For example, the configuration information for the beam reporting periodicity may be delivered via Uplink Control Information (UCI), Medium Access Control Control Element (MAC CE), and/or Radio Resource Control (RRC) signaling. In addition, according to a specific condition, the configuration information for the beam reporting periodicity may be delivered through another transmission channel.

In a specific situation, the base station may provide configuration information for the beam reporting periodicity to the terminal through higher-layer signaling (in table form). In this case, the terminal may apply a beam reporting periodicity configured based on a predefined condition. For example, when a specific quality criterion is satisfied, the periodicity may be set to be long, and when a specific speed range is exceeded, the periodicity may be set to be short.

Meanwhile, if a beam reporting periodicity is not configured, the terminal may perform only a single beam reporting operation when a condition for triggering beam reporting is satisfied. That is, the terminal may perform beam reporting only at a moment when a specific event (e.g. failure to satisfy a specific quality criterion, exceeding a specific speed, etc.) occurs, and may not perform additional beam reporting thereafter.

### Adjustment of number of beam reporting operations

In another exemplary embodiment, a number of beam reporting operations until a condition for stopping a beam reporting operation (e.g. an event release condition) is reached may be set according to a specific condition. Here, the specific condition may be configured differently according to a state or operation of a terminal, network requirements, and the like, and may include factors related to a state or operation of the terminal, or a surrounding environment in which the terminal is located.

Specifically, a state condition related to the terminal may include signal quality indicators indicating a quality of a current beam (e.g. L1-RSRP, L1-RSRQ, L1-SINR) or a quality of a new beam (e.g. L1-RSRP, L1-RSRQ, L1-SINR). In addition, a number of beam reporting operations may be set based on comparison between the quality and a specific threshold value. For example, when the quality of the current beam is maintained at or above a certain level, that is, when signal quality of a beam currently received by the terminal is sufficiently good, a need to perform beam reporting may decrease. Conversely, when the quality of the current beam deteriorates rapidly, more frequent beam reporting may be required, and in this case, the number of beam reporting operations may increase. In addition, in a situation in which the terminal needs to switch to a new beam, a quality of the new beam may also become an important criterion. For example, when signal quality of the new beam is sufficiently stable, the number of beam reporting operations may be reduced. However, when the quality of the new beam is unstable, continuous beam reporting may be required.

Operation conditions related to the terminal may include factors such as a speed of the terminal, whether the terminal rotates, and occurrence of blockage (signal blocking) for the terminal. For example, as the speed of the terminal increases, a channel environment changes more rapidly, and thus more frequent beam reporting may be required. On the other hand, when the speed of the terminal is very low or when the terminal is stationary, the number of beam reporting operations may be reduced, or beam reporting may be performed only when necessary. In addition, a need for beam reporting when the terminal moves only in a fixed direction and a need for beam reporting when the terminal rotates may differ from each other. For example, a terminal moving in a fixed direction is likely to use a relatively constant beam, whereas a terminal rotating continuously may need to perform more frequent beam reporting in order to maintain an optimal beam. Similarly, when buildings or obstacles exist nearby and blockage is likely to occur in a specific direction, the terminal may perform beam reporting before reaching an area in which blockage is likely to occur so that an optimal beam can be selected quickly.

In addition, surrounding environmental conditions of the terminal may also affect determination of the number of beam reporting operations. For example, when the terminal is located at a specific geographic location, the number of beam reporting operations may be set differently. In an environment in which base stations and beams are densely deployed, such as an urban area, the terminal is likely to change beams frequently, and thus the number of beam reporting operations may increase. On the other hand, in an open area (e.g. a wide plain or above the sea), a need for beam changes may be relatively low, and thus the number of beam reporting operations may decrease. In addition, beam reporting configuration may be adjusted according to network load conditions. For example, during a period in which network traffic is high, the number of beam reporting operations may be limited to reduce unnecessary beam reporting. Conversely, during a period in which a network is lightly loaded, frequent beam reporting may be allowed for more precise beam optimization.

A case in which the number of beam reporting operations is set to infinity may also be considered. For example, when the quality of the current beam is low and the terminal is moving rapidly, more frequent beam reporting may be required. In particular, when the number of beam reporting operations is set to infinity, the terminal may continuously perform beam reporting (according to a configured beam reporting periodicity) until a condition for stopping the beam reporting operation (e.g. an event release condition) is reached. This may be useful when the terminal moves at a very high speed or in an environment in which a signal environment changes rapidly, and may help the base station allocate a more appropriate beam more quickly.

The above-described number of beam reporting operations may be determined by the terminal itself based on a state or operation related to the terminal, or factors related to a surrounding environment in which the terminal is located. Alternatively, the base station may determine the number of beam reporting operations based on information regarding the state or operation related to the terminal, or the surrounding environment in which the terminal is located, and may provide configuration information for the determined number of beam reporting operations to the terminal. In this case, information regarding the state or operation related to the terminal, or the surrounding environment in which the terminal is located, may be reported explicitly or implicitly by the terminal to the base station. Additionally or alternatively, information regarding the state or operation related to the terminal, or the surrounding environment in which the terminal is located, may be derived or predicted by the base station based on information collected by the base station.

The configuration information for the number of beam reporting operations may be delivered to the terminal in various manners. For example, the configuration information for the number of beam reporting operations may be delivered via UCI, MAC CE, and/or RRC signaling. In addition, according to a specific condition, the configuration information for the number of beam reporting operations may be delivered through another transmission channel.

When beam reporting has been performed the configured number of times, the terminal may stop the beam reporting operation even before a condition for stopping the beam reporting operation (e.g. an event release condition) is satisfied. For example, after performing beam reporting the configured number of times, if the quality of the current beam is sufficiently stable, the terminal may determine that additional beam reporting is unnecessary and may stop beam reporting.

Conversely, the condition for stopping the beam reporting operation may be satisfied before the configured number of beam reporting operations is reached. For example, when the quality of the current beam improves rapidly and additional beam reporting becomes unnecessary (i.e. when the triggering condition of the event is released), the terminal may stop beam reporting even though the configured number of beam reporting operations has not been reached. In addition, when the terminal detects a network configuration change or a specific environmental change (e.g. connection to a new base station), the terminal may stop beam reporting even though the configured number of beam reporting operations has not been reached.

### Adjustment of beam reporting execution time

In another exemplary embodiment, a beam reporting execution time until a condition for stopping a beam reporting operation (e.g. an event release condition) is reached may be configured according to a specific condition. Here, the specific condition may be configured differently according to a state or operation of a terminal, network requirements, and the like, and may include factors related to the state or operation of the terminal, or the surrounding environment in which the terminal is located. In addition, the beam reporting execution time may refer to a duration from a time at which an event is detected (i.e. a triggering time) to a time at which a beam report according to the event is transmitted for the last time.

Specifically, a state condition related to the terminal may include signal quality indicators indicating a quality of a current beam (e.g. L1-RSRP, L1-RSRQ, L1-SINR) or a quality of a new beam (e.g. L1-RSRP, L1-RSRQ, L1-SINR). In addition, the beam reporting execution time may be configured based on comparison between the quality and a specific threshold value.

For example, when the quality of the current beam is high, the beam reporting execution time may become relatively long, and this may contribute to optimizing resource usage by reducing unnecessary beam reporting. On the other hand, when the quality of the current beam deteriorates or when the quality of a new beam becomes higher than or equal to a certain threshold value, the beam reporting execution time may be shortened so that the terminal can perform beam reporting more quickly.

As another example, operation conditions related to the terminal (e.g. a speed of the terminal, whether the terminal rotates, and occurrence of blockage (signal blocking) for the terminal) may also affect the beam reporting execution time. For example, as the speed of the terminal increases, a possibility that the current beam is maintained for a shorter time becomes higher, and thus the beam reporting execution time may become shorter. On the other hand, when the speed of the terminal is low, a possibility that the current beam is maintained for a longer time becomes higher, and thus the beam reporting execution may become longer. In addition, when the terminal rotates in a specific direction or when blockage occurs, quality of the current beam may rapidly deteriorate, and thus more frequent beam reporting may be required. Accordingly, the beam reporting execution time may become shorter.

As yet another example, surrounding environmental conditions of the terminal may also affect the beam reporting execution time. For example, when the terminal is located at a specific geographic location and a beam quality at the location is stable, the beam reporting execution time may become relatively long. On the other hand, in an environment in which surrounding obstacles or radio interference are abundant, a possibility that beam quality changes rapidly may increase, and thus a shorter beam reporting execution time may be configured. Configuration of the beam reporting execution time may vary according to environmental factors such as inside a specific building, a dense urban area, or an open area.

The above-described beam reporting execution time may be determined by the terminal itself based on a state or operation related to the terminal, or factors related to a surrounding environment in which the terminal is located. Alternatively, a base station may determine the beam reporting execution time based on information regarding the state or operation related to the terminal, or the surrounding environment in which the terminal is located, and may provide configuration information for the determined beam reporting execution time to the terminal. In this case, information regarding the state or operation related to the terminal, or the surrounding environment in which the terminal is located, may be reported explicitly or implicitly by the terminal to the base station. Additionally or alternatively, information regarding the state or operation related to the terminal, or the surrounding environment in which the terminal is located, may be derived or predicted by the base station based on information collected by the base station.

Configuration information for the beam reporting execution time may be delivered to the terminal in various manners. For example, the configuration information for the beam reporting execution time may be delivered via UCI, MAC CE, and/or RRC signaling. In addition, according to a specific condition, the configuration information for the beam reporting execution time may be delivered through another transmission channel.

Meanwhile, the beam reporting execution time may have a relationship with the beam reporting periodicity and the number of beam reporting operations described above. For example, when the beam reporting execution time is set to be long, the number of beam reporting operations by the terminal may decrease. Conversely, when the beam reporting execution is set to be short, the number of beam reporting operations by the terminal may increase.

For example, assuming that two terminals performing beam reporting according to respective periodicities A and B (A < B) have the same beam reporting execution time, a terminal performing beam reporting according to the shorter periodicity A may perform beam reporting relatively more frequently than a terminal performing beam reporting according to the longer periodicity B. That is, the beam reporting periodicity and the beam reporting execution time may mutually affect each other. Accordingly, the base station may establish a strategy for allocating resources for efficient beam reporting by considering such information.

In this case, the base station may allocate resources for a beam reporting operation of the terminal by comprehensively considering the above-described beam reporting periodicity, number of beam reporting operations, and beam reporting execution time. For example, the base station may allocate appropriate resources in advance so that the terminal can efficiently perform beam reporting during the configured beam reporting execution time, thereby ensuring smooth delivery of beam reports from the terminal to the network. Alternatively, when a specific condition for performing beam reporting is satisfied, the terminal may request resources for performing beam reporting from the base station at a time at which an event causing beam reporting is detected. For example, when a quality of a current beam deteriorates below a threshold value or when a quality of a new beam increases above a certain level, a beam reporting event may be detected, and the terminal may request resources for beam reporting from the base station. Meanwhile, the base station may perform a beam management operation by analyzing one or more beam reports received from the terminal. That is, the base station may select an optimal beam based on the beam report(s) received from the terminal and may perform beam switching so that the terminal can maintain the optimal beam.

### Beam reporting periodicity/number/time adjustment procedure

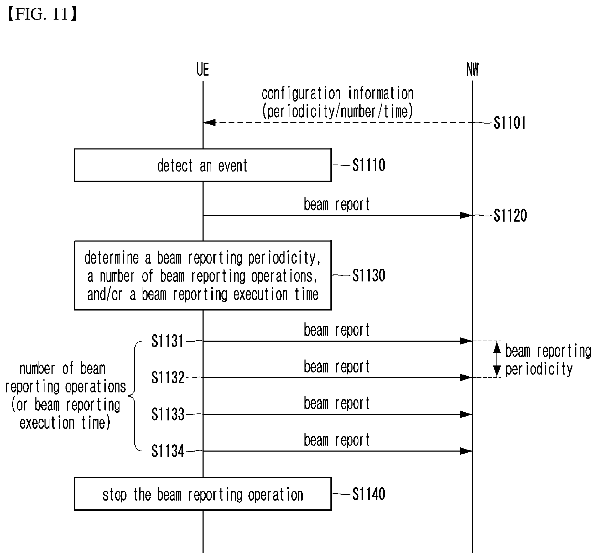

FIG. 11 is a sequence diagram illustrating a method of configuring a beam reporting operation according to exemplary embodiments of the present disclosure.

As shown in FIG. 11, a base station may transmit configuration information regarding an event-driven beam reporting operation to a terminal, and the terminal may receive the configuration information regarding the event-driven beam reporting operation from the base station (S1101). In this case, the configuration information regarding the event-driven beam reporting operation may be included in a conventional CSI report configuration and transmitted, or may be transmitted through a separate signaling message. The configuration information may include information regarding the beam reporting periodicity, the number of beam reporting operations, and/or the beam reporting execution time described above, or information required to determine the beam reporting periodicity, the number of beam reporting operations, and/or the beam reporting execution time described above. Meanwhile, as described above, the beam reporting periodicity, the number of beam reporting operations, and/or the beam reporting execution time may be determined by the terminal itself. Accordingly, the operation of receiving configuration information regarding the event-driven beam reporting operation (S1101) may be an optional procedure.

Meanwhile, the configuration information regarding the event-driven beam reporting operation may include, for each event type, information regarding the beam reporting periodicity, the number of beam reporting operations, and/or the beam reporting execution time, or information required to determine the beam reporting periodicity, the number of beam reporting operations, and/or the beam reporting execution time.

Next, the terminal may detect an event (S1110). The detected event may be at least one of the above-described events and additional events to be defined. When the event is detected, the terminal may transmit a beam report based on the detected event to the base station (S1120). Here, the beam report may be transmitted to the base station through Mode A operation or Mode B operation described above with reference to FIG. 9 and FIG. 10.

Next, the terminal may determine a beam reporting periodicity, a number of beam reporting operations, and/or a beam reporting execution time for the detected event (S1130). In FIG. 11, the step S1130 is illustrated as being performed after the step S1120 of transmitting the beam report. However, the step S1130 may also be performed before the step S1120 of transmitting the beam report. That is, when at least one beam report is required to be guaranteed for the detected event (i.e. a conventional event-driven beam reporting operation), the step S1130 may be performed after the step S1120 as part of an operation for determining whether an additional beam reporting operation is to be performed. Meanwhile, when the step S1120 is performed after the step S1130, the step S1120 may be interpreted as a step of transmitting a first beam report according to the beam reporting periodicity, the number of beam reporting operations, and/or the beam reporting execution time determined in the step S1130.

The terminal may perform beam reporting according to the beam reporting periodicity, the number of beam reporting operations, and/or the beam reporting execution time determined in the step S1130 (S1131, S1132, S1133, S1134). Although FIG. 11 illustrates a situation in which beam reporting is performed four times (or a situation in which beam reporting is performed four times within the beam reporting execution time according to the configured beam reporting periodicity), this is merely for convenience of description, and the number of beam reporting operations is not limited to four.

### Event timers

Meanwhile, conditions for triggering an event need to be defined more clearly. This is because, for a specific event, the same event may be repeatedly detected during a short period of time depending on a current state of the terminal or a channel environment between the base station and the terminal.

In such a case, the terminal may frequently perform beam reporting whenever the event is detected, thereby increasing signaling overhead. In addition, there is a possibility that unnecessary frequent beam switching procedures may occur in the terminal or the base station.

Accordingly, in order to prevent a situation in which beam reporting is continuously or periodically performed because an event is continuously or periodically detected during a short period of time in a specific environment, one or more predetermined timers may be applied when beam reporting based on a corresponding event is performed upon detection of the above-described event or an additionally defined event. For example, a beam reporting hold timer T1 and/or a repeated occurrence prevention timer T2 may be considered. Whether the timer(s) are to be applied may be determined according to a specific condition, a stopping condition of the timer may be determined according to a specific condition, and a configuration value of the timer may be determined according to a specific condition.

FIG. 12 is a sequence diagram illustrating a timer-based beam reporting operation according to an exemplary embodiment of the present disclosure.

As shown in FIG. 12, even when a specific event is detected (S1210), a terminal may not immediately perform beam reporting, and may start the timer T1 at a time at which the event is detected (S1220). When the timer T1 expires, the terminal may perform beam reporting based on the corresponding event (S1230). That is, if an event triggering condition is maintained until the timer T1 expires (i.e. if the generated event is not released), the terminal may perform beam reporting based on the corresponding event to the base station. Conversely, if the event triggering condition changes such that the event triggering condition is no longer satisfied until the timer T1 expires (i.e. if the generated event is released), the terminal may not perform beam reporting based on the corresponding event to the base station (i.e. the corresponding event may be cancelled).

In addition, when a specific event (hereinafter, 'event-N') is detected and the timer T1 for event-N is configured, even if another event (hereinafter, 'event-M') is detected before expiration of the timer T1, the terminal may ignore (cancel) event-M if the triggering condition of event-N is maintained until expiration of the timer T1. Conversely, in the above situation, the terminal may ignore (cancel) event-N, and a new timer T1' may be configured based on a time at which event-M is detected. If the triggering condition of event-M is maintained until expiration of the new timer T1', the terminal may perform beam reporting based on event-M. In this case, T1 and T1' may be configured for each event type, or may be configured with identical values for all event types.

FIG. 13 is a sequence diagram illustrating a timer-based beam reporting operation according to another exemplary embodiment of the present disclosure.

As shown in FIG. 13, even when a specific event is detected (S1310), a terminal may not immediately perform beam reporting, and may start the timer T2 at a time at which the event is detected (S1320). If a specific condition is not satisfied, the terminal may cancel the corresponding event and may not perform beam reporting. Here, the specific condition may be a condition that the same event is detected fewer than a specific number of times before expiration of the repeated occurrence prevention timer T2 configured at the time at which the event is detected. That is, if the same event is detected at least a specific number of times before expiration of the timer T2, the terminal may not perform beam reporting to the base station. Conversely, if the specific condition is satisfied, the terminal may transmit beam reporting based on the detected event to the base station (S1330).

As a specific example, when a specific event (hereinafter, 'event-N') is detected and the timer T2 for event-N is configured, if another event (hereinafter, 'event-M') is detected before expiration of the timer T2 and the same event (i.e. event-M) is detected at least a specific number of times before expiration of a timer T2' for event-M, the terminal may not perform beam reporting. That is, when an event (i.e. event-M) different from the previously detected event (i.e. event-N) occurs, the timer for the previously detected event (i.e., event-N) may be reset. In this case, T2 and T2' may be configured for each event type, or may be configured with identical values for all event types. For example, from a terminal perspective, the same repeated occurrence prevention timer may be used regardless of an event type, and if the same event repeatedly occurs at least a specific number of times before expiration of the timer, the terminal may not perform beam reporting.

In the above exemplary embodiments, whether timers (e.g. T1 and/or T1', T2 and/or T2', etc.) are applied and values of the timers may vary according to event types. Accordingly, it may be necessary to inform the base station that an event change has occurred or to specify what the changed event is. To this end, the terminal may transmit a parameter such as an event change indicator (having a length of 1 bit, indicating no event change when set to 0 and indicating an event change when set to 1) and/or an event ID to the base station.

In the above exemplary embodiments, parameter(s) and/or timer value(s) may be transmitted through MAC CE signaling, RRC signaling, PHY signaling (i.e. downlink control information (DCI) or uplink control information (UCI)), and/or various other signaling schemes. Alternatively, parameter(s) and/or timer value(s) may be predefined by technical specifications or may be preconfigured in the terminal.

In the above exemplary embodiments, parameter(s) and/or timer value(s) may be determined depending on conditions related to the terminal (e.g. quality of the current beam and/or quality of the new beam and/or threshold(s)), the state of the terminal (e.g. the speed of the terminal, whether the terminal rotates, and whether the terminal experiences blockage), and/or the environment of the terminal (e.g. a geographic location of the terminal).

In the above exemplary embodiments, that a UE-initiated beam management operation (or a beam reporting operation) is performed may be broadly interpreted as meaning that the terminal transmits signaling indicating that the UE-initiated beam management operation (or the beam reporting operation) is performed to the base station.

In the above exemplary embodiments, that a UE-initiated beam management operation (or a beam reporting operation) is stopped or suspended may be broadly interpreted as meaning that the terminal (or the base station) transmits signaling indicating that the UE-initiated beam management operation (or the beam reporting operation) is stopped or suspended to the base station (or the terminal). Alternatively, that a UE-initiated beam management operation (or a beam reporting operation) is stopped or suspended may be narrowly interpreted as meaning that a legacy base-station-initiated beam management operation is performed without performing the UE-initiated beam management operation (or the beam reporting operation).

In the above exemplary embodiments, when a beam reporting operation is performed through the defined events, a beam report may be transmitted only a specific number of times (with a specific periodicity) or may be continuously transmitted (with a specific periodicity).

The methods proposed through the above exemplary embodiments may be identically or similarly applied to event(s) additionally defined beyond the defined events. The methods proposed through the above exemplary embodiments may be applied to intra-cell and/or inter-cell beam management. The methods proposed through the above exemplary embodiments may also be identically or similarly applied to multi-TRP (mTRP) operations.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a terminal for a beam reporting operation, the method comprising:
detecting an event;
determining at least one beam reporting control parameter among a beam reporting periodicity, a number of beam reporting operations, and a beam reporting execution time according to the detected event; and
transmitting, to a base station, a beam report based on the detected event according to the at least one beam reporting control parameter.

2. The method of claim 1, further comprising: receiving, from the base station, configuration information including at least one of the beam reporting periodicity, the number of beam reporting operations, and the beam reporting execution time, or including information required to determine at least one of the beam reporting periodicity, the number of beam reporting operations, and the beam reporting execution time,
wherein the at least one beam reporting control parameter is determined based on the configuration information.

3. The method of claim 1, wherein the configuration information is configured for each event type.

4. The method of claim 1, wherein the at least one beam reporting control parameter is determined by the terminal based on a state of the terminal, an operation of the terminal, and/or an environment of the terminal.

5. The method of claim 1, wherein, based on the at least one beam reporting control parameter including the beam reporting periodicity, in transmitting the beam report to the base station, beam reporting is continuously performed according to the beam reporting periodicity until a triggering condition of the event is released.

6. The method of claim 1, wherein, based on the at least one beam reporting control parameter including the number of beam reporting operations, beam reporting is performed for the number of beam reporting operations in transmitting the beam report to the base station.

7. The method of claim 1, wherein beam reporting is stopped upon release of a triggering condition of the event before a number of performed beam reporting operations reaches the number of beam reporting operations included in the at least one beam reporting control parameter.

8. The method of claim 1, wherein, based on the at least one beam reporting control parameter including the beam reporting execution time, in transmitting the beam report to the base station, beam reporting is performed during the beam reporting execution time until a triggering condition of the event is released.

9. A method of a terminal for a beam reporting operation, the method comprising:
detecting a first event according to satisfaction of a triggering condition of the first event;
starting a first timer for holding beam reporting based on the first event; and
transmitting, to a base station, a beam report based on the first event upon expiration of the first timer and maintenance of satisfaction of the triggering condition of the first event.

10. The method of claim 9, further comprising: based on the triggering condition of the first event becoming unsatisfied before expiration of the first timer, cancelling the first event without transmitting the beam report based on the first event to the base station.

11. The method of claim 9, further comprising: based on a second event different from the first event being detected before expiration of the first timer, cancelling the first event and starting a first timer for holding beam reporting based on the second event.

12. The method of claim 9, further comprising: based on a second event different from the first event being detected before expiration of the first timer, ignoring the second event.

13. The method of claim 9, further comprising: receiving, from the base station, configuration information including whether the first timer is to be applied and/or a timer value for the first timer,
wherein the first timer is started based on the configuration information.

14. The method of claim 13, wherein the configuration information is configured for each event type.

15. The method of claim 9, wherein whether the first timer is to be applied and/or a timer value for the first timer is determined by the terminal based on a state of the terminal, an operation of the terminal, and/or an environment of the terminal.

16. A method of a terminal for a beam reporting operation, the method comprising:
detecting a first event according to satisfaction of a triggering condition of the first event;
starting a first timer for preventing repetition of beam reporting based on the first event; and
transmitting, to a base station, a beam report based on the first event upon an event identical to the first event being detected fewer than a specific number of times before expiration of the first timer.

17. The method of claim 16, further comprising: based on an event identical to the first event being detected at least a specific number of times before expiration of the first timer, cancelling the first event without transmitting the beam report based on the first event.

18. The method of claim 16, further comprising: based on a second event different from the first event being detected before expiration of the first timer, cancelling the first event and starting a first timer for preventing repetition of beam reporting based on the second event.

19. The method of claim 16, further comprising: receiving, from the base station, configuration information including whether the first timer is to be applied and/or a timer value for the first timer,
wherein the first timer is started based on the configuration information.

20. The method of claim 16, wherein whether the first timer is to be applied and/or a timer value for the first timer is determined by the terminal based on a state of the terminal, an operation of the terminal, and/or an environment of the terminal.
